# EUROPÄISCHE PATENTSCHRIFT

(11) **EP 2 794 731 B1**
(45) Veröffentlichungstag und Bekanntmachung des Hinweises auf die Patenterteilung: **09.03.2016**
(21) Anmeldenummer: 12812611.7
(22) Anmeldetag: 19.12.2012
(51) Int. Cl.: C08F 6/00, C08J 3/205, C08J 3/20

(54) **VERFAHREN ZUR KONFEKTIONIERUNG WÄSSRIGER POLYMERDISPERSIONEN**
METHOD FOR PRODUCING AQUEOUS POLYMER DISPERSIONS
PROCÉDÉ POUR CONFECTIONNER DES DISPERSIONS AQUEUSES DE POLYMÈRES

(30) Priorität: 20.12.2011 DE 102011089271
(43) Veröffentlichungstag der Anmeldung: 29.10.2014
(73) Patentinhaber: Wacker Chemie AG, 81737 München (DE)
(72) Erfinder: FREIDANCK, Frank, 84489 Burghausen (DE)
(74) Vertreter: Ege, Markus
(86) Internationale Anmeldenummer: PCT/EP2012/076245
(87) Internationale Veröffentlichungsnummer: WO 2013/092771

(56) Entgegenhaltungen:
- EP-A2- 1 041 093
- DE-A1- 10 107 044
- DE-A1- 19 617 183

## Beschreibung

Die Erfindung betrifft Verfahren zur Konfektionierung wässriger Dispersionen von Polymeren auf Basis ethylenisch ungesättigter Monomere.

Wässrige Polymerdispersionen, beispielsweise wässrige Dispersionen von Vinylacetat-Ethylen-Copolymeren, werden im Allgemeinen mittels radikalisch initiierter Suspensionspolymerisation oder mittels radikalisch initiierter Emulsionspolymerisation hergestellt. Solche Polymerdispersionen haben ein breites Anwendungsspektrum und werden beispielsweise als Bindemittel für Beschichtungsmittel, wie Farben, als Bindemittel in Klebstoffen oder als Beschichtungsmittel bzw. Bindemittel für Textilien oder Papier eingesetzt. Weitere Anwendungen sind ihr Einsatz als Bindemittel in bauchemischen Produkten, häufig in Verbindung mit mineralischen Bindemitteln, als Bindemittel in Bauklebern wie Fliesenkleber oder Vollwärmeschutzkleber, in Putzen, Spachtelmassen, Verlaufsmassen, Dichtschlämmen, Fugenmörteln oder als Zusatzstoffe zu Beton.

Je nach Anwendungsgebiet besteht die Notwendigkeit, solche Polymerdispersionen entsprechend zu konfektionieren, das heißt, entsprechende Zusatzstoffe zuzugeben. Beispiele hierfür sind die Zugabe von Bioziden oder Konservierungsmitteln zur Optimierung der Lagerstabilität der Polymerdispersionen oder die Zugabe von Entschäumern zur Optimierung der Verarbeitbarkeit, oder das Einstellen eines optimalen pH-Wertes durch Zugabe von Säuren oder Basen oder die Zugabe von Hydrophobierungsmitteln.

Die Zusatzstoffe zur Ausrüstung (Konfektionierung) der wässrigen Polymerdispersionen werden nach Abschluss der Polymerisation zugegeben. Da die radikalisch initiierte Polymerisation von ethylenisch ungesättigten Monomeren im Allgemeinen bei einem Temperaturniveau weit über Raumtemperatur, meist bei 60°C bis 90°C durchgeführt wird, die Zusatzstoffe aber, welche zur Konfektionierung eingesetzt werden, in vielen Fällen temperaturempfindlich sind, besteht die Notwendigkeit, die Polymerdispersion nach Abschluss der Polymerisation bis auf Temperaturen von etwa 25 °C bis 45 °C abzukühlen und dann erst die Zusatzstoffe zuzugeben. Zusätzlich besteht die Notwendigkeit der Abkühlung der fertigen Polymerdispersion deshalb, weil im Lagerbehälter an der Oberfläche der wässrigen Polymerdispersionen gerade bei zu hoher Temperatur eine Hautbildung in erheblichem Maße auftreten kann.

Bisher ist man daher so vorgegangen, dass nach Abschluss der Polymerisation die Polymerdispersion aus dem Polymerisationsreaktor in einen, im Allgemeinen etwas größer dimensionierten Behälter, überführt worden ist, welcher mit Kühleinrichtungen, beispielsweise Doppelwand oder Wärmetauscher, ausgerüstet ist. Solche Behälter werden häufig als Konfektionierbehälter bezeichnet. Als Konfektionierbehälter können auch Entspannungsbehälter eingesetzt werden. Entspannungsbehälter werden im Allgemeinen eingesetzt, wenn die Polymerisation im Polymerisationsreaktor unter Druck durchgeführt wird, was üblicherweise bei der Polymerisation von gasförmigen Monomeren, wie Ethylen oder Propylen, der Fall ist. Im Anschluss an die Polymerisation werden die Polymerdispersionen dann in Entspannungsbehälter überführt, um die Polymerdispersionen zur Entfernung von gasförmigen Restmonomeren zu entspannen und parallel hierzu zu kühlen. Weitere Restmonomeranteile können mittels Strippen entfernt werden. Neben diesen physikalischen Maßnahmen zur Restmonomerentfernung wird häufig auch eine Nachpolymerisation durchgeführt. Eine solche Vorgehensweise ist beispielsweise in der WO 2008/000649 A1 angedeutet. Nach Abkühlung der Polymerdispersion wird dann in diesem Behälter die Konfektionierung mit den entsprechenden Additiven durchgeführt.

Nachteilig bei dieser Verfahrensweise ist der lange Zeitraum, welcher für die Abkühlung der Polymerdispersion im Konfektionierbehälter bzw. Entspannungsbehälter benötigt wird. Darüber hinaus müssen vor der Endkonfektionierung der Polymerdispersion mit den genannten Additiven häufig Haltezeiten eingehalten werden, damit beispielsweise empfindliche Additive durch die bei der Nachpolymerisation eingesetzten Agenzien und/oder durch zu hohe Temperaturen nicht abgebaut werden. Dies führt dazu, dass in vielen Polymerisationsprozessen mit einer durchschnittlichen Polymerisationsdauer von fünf Stunden die Nachpolymerisation und Endkonfektionierung zum bestimmenden Schritt für die Zyklusdauer werden, da mit den bisherigen Verfahren hierfür vier bis zehn Stunden aufzuwenden sind.

Es bestand daher die Aufgabe, Verfahren zur Konfektionierung von wässrigen Polymerdispersionen zur Verfügung zu stellen, mit welchen die oben genannten Nachteile vermieden werden können.

Gegenstand der Erfindung sind Verfahren zur Konfektionierung wässriger Dispersionen von Polymeren auf Basis ethylenisch ungesättigter Monomere, indem ethylenisch ungesättigte Monomere mittels radikalisch initiierter Polymerisation in wässrigem Medium in einem Polymerisationsreaktor polymerisiert werden und die dabei gebildete wässrige Polymerdispersion in einen oder mehrere Entspannungsbehälter überführt wird und anschließend in einen oder mehrere Lagerbehälter transferiert wird, dadurch gekennzeichnet, dass
die wässrige Polymerdispersion zwischen dem Entspannungsbehälter und dem Lagerbehälter
a) zuerst mit einem oder mehreren Wärmetauschern auf eine Temperatur von ≤ 45 °C abgekühlt wird und
b) anschließend zwischen Wärmetauscher und Lagerbehälter eine oder mehrere Additiv(e) zudosiert werden. Dieses Verfahren wird im Folgenden auch als Verfahren mit Entspannungsbehälter bezeichnet.

Ein weiterer Gegenstand der vorliegenden Erfindung ist ein alternatives Verfahren zur Konfektionierung wässriger Dispersionen von Polymeren auf Basis ethylenisch ungesättigter Monomere, indem ethylenisch ungesättigte Monomere mittels radikalisch initiierter Polymerisation in wässrigem Medium in einem Polymerisationsreaktor polymerisiert werden und die dabei gebildete wässrige Polymerdispersion vom Polymerisationsreaktor in einen oder mehrere Lagerbehälter transferiert wird, dadurch gekennzeichnet, dass die wässrige Polymerdispersion zwischen dem Polymerisationsreaktor und dem Lagerbehälter
a) zuerst mit einem oder mehreren Wärmetauschern auf eine Temperatur von ≤ 45 °C abgekühlt wird und
b) anschließend zwischen Wärmetauscher und Lagerbehälter eine oder mehrere Additiv(e) zudosiert werden,
wobei die wässrige Polymerdispersion vor Transferieren in einen Lagerbehälter in keinen Entspannungsbehälter und in keinen Konfektionierbehälter überführt wird. Dieses Verfahren wird im Folgenden auch als Verfahren ohne Entspannungsbehälter bezeichnet.

Soweit nicht anders angegeben beziehen sich die folgenden Angaben sowohl auf das Verfahren mit Entspannungsbehälter wie auch auf das Verfahren ohne Entspannungsbehälter.

Ein wesentlicher Vorteil der erfindungsgemäßen Verfahren ist, dass die Polymerdispersionen im Anschluss an die radikalische Polymerisation in keinem Behälter zwischengelagert werden müssen, um die Polymerdispersionen auf die für die Konfektionierung gewünschte Temperatur zu kühlen.

Zur Herstellung der wässrigen Polymerdispersionen geeignete ethylenisch ungesättigte Monomere sind solche aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, ethylenisch ungesättigte Carbonsäureamide, ethylenisch ungesättigte Sulfonsäuren bzw. deren Salze, vorvernetzende Comonomere wie mehrfach ethylenisch ungesättigte Comonomere, nachvernetzende Comonomere wie N-Methylolacrylamid, epoxidfunktionelle Comonomere oder siliciumfunktionelle Comonomere.

Bevorzugt werden wässrige Polymerdispersionen auf der Basis von Vinylacetat-Homopolymerisaten; Mischpolymerisaten von Vinylacetat mit 1 bis 40 Gew.-% Ethylen; Mischpolymerisaten von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, VeoVa10R, Veo-Va11R; Mischpolymerisaten von Vinylacetat, 1 bis 40 Gew.-% Ethylen und vorzugsweise 1 bis 60 Gew.-% (Meth)-Acrylsäureester von unverzweigten oder verzweigten Alkoholen mit 1 bis 15 C-Atomen, insbesondere Methylmethacrylat, n-Butylacrylat oder 2-Ethylhexylacrylat; Mischpolymerisaten mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, n-Butylacrylat oder 2-Ethylhexylacrylat, welche noch 1 bis 40 Gew.-% Ethylen enthalten können; Mischpolymerisaten mit Vinylacetat, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% zu jeweils 100 Gew.-% addieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Styrol-1,3-Butadien-Copolymerisate; wobei die Polymerisate noch die genannten Hilfsmonomere in den genannten Mengen enthalten können, und sich die Angaben in Gew.-% zu jeweils 100 Gew.-% addieren.

Die Herstellung der Basispolymerisate erfolgt nach dem Suspensionspolymerisationsverfahren oder vorzugsweise nach dem Emulsionspolymerisationsverfahren. Die Polymerisationstemperatur ist vorzugsweise zwischen 50 °C und 100 °C, besonders bevorzugt zwischen 60 °C und 90 °C.

Bei der Copolymerisation von gasförmigen Comonomeren wie Ethylen, 1,3-Butadien oder Vinylchlorid kann auch unter Druck, im Allgemeinen zwischen 5 bar und 100 bar, polymerisiert werden. Für diesen Fall findet im Allgemeinen das erfindungsgemäße Verfahren mit Entspannungsbehälter Einsatz.

Bei Abwesenheit von gasförmigen Monomeren wird im Allgemeinen bei Umgebungsdruck oder im Bereich von 0,8 bis 5 bar, polymerisiert. Für diesen Fall findet im Allgemeinen das erfindungsgemäße Verfahren ohne Entspannungsbehälter Einsatz.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Üblicherweise erfolgt die Polymerisation in Gegenwart von Dispergierhilfsmitteln, wobei sowohl Schutzkolloide als auch Emulgatoren in Betracht kommen.

Geeignete Schutzkolloide sind teilverseifte Polyvinylalkohole; Polyvinylpyrrolidone; Polysaccharide in wasserlöslicher Form wie Stärken, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4%-iger wässriger Lösung von 1 bis 30 mPas (Methode nach Höppler bei 20 °C, DIN 53015). Die Schutzkolloide werden im allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren kann auch in Gegenwart von Emulgatoren polymerisiert werden, wobei die Mengen an Emulgator im Allgemeinen 1 bis 10 Gew.-%, bezogen auf das Gesamtgewicht der Monomere, betragen. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 EthylenoxidEinheiten.

Die Polymerisation kann in einem Batchverfahren, Semibatchverfahren oder in einem kontinuierlichen Verfahren durchgeführt werden. Die Monomere können dabei insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Polymerisation wird im Allgemeinen bis zu einem Umsatz von ≥ 95 Gew.-%, vorzugsweise bis zu einem Umsatz von 95 bis 99 Gew.-% der unter Polymerisationsbedingungen flüssigen Monomere durchgeführt.

Im Falle des Verfahrens mit Entspannungsbehälter wird das Polymerisationsgemisch anschließend aus dem Polymerisationsreaktor in einen Entspannungsbehälter überführt. Bei der Herstellung von Druckdispersionen, bei der gasförmige Monomere unter Druck polymerisiert werden, beispielsweise Mischpolymerisaten von Vinylacetat und Ethylen, wird im Entspannungsbehälter auf einen Druck von 0,1 bis 5,0 bar abs., vorzugsweise 0,1 bis 1,0 bar abs., entspannt, wobei gasförmiges Restmonomer abgesaugt wird. Bei diskontinuierlichem Betrieb (Batch- oder Semibatch-Fahrweise) erfolgt der Transfer in einen oder mehrere Entspannungsbehälter nach abgeschlossener Polymerisation. Bei kontinuierlicher Polymerisation wird das Polymerisationsgemisch kontinuierlich in ein oder mehrere Entspannungsbehälter überführt.

Im Verfahren ohne Entspannungsbehälter sind die Polymerdispersionen im Polymerisationsreaktor sowie zwischen dem Polymerisationsreaktor und dem Lagerbehälter im Allgemeinen dem Umgebungsdruck, d.h. einem Druck von vorzugsweise 0,8 bis 1,2 bar abs. ausgesetzt.

Im Entspannungsbehälter oder im Polymerisationsreaktor kann gegebenenfalls in Anwendung bekannter Methoden nachpolymerisiert werden, beispielsweise durch mit Redox-Initiator initiierter Nachpolymerisation. Der flüchtige Restmonomeranteil wird gegebenenfalls mittels Überleiten oder vorzugsweise Durchleiten von inerten Schleppgasen wie Luft, Stickstoff oder vorzugsweise Wasserdampf über/durch die wässrige Polymerdispersion in dem Fachmann bekannter Weise entfernt (Strippen). Vorzugsweise wird so vorgegangen, dass während der Nachpolymerisation und gegebenenfalls des Strippens keine aktive Kühlung erfolgt.

Das Transferieren der Polymerdispersionen vom Polymerisationsreaktor in den Entspannungsbehälter bzw. vom Entspannungsbehälter in den Lagerbehälter oder das Transferieren der Polymerdispersionen vom Polymerisationsreaktor in den Lagerbehälter kann über die hierfür gängigen Leitungen erfolgen, wie Rohrleitungen, insbesondere Stahlrohre. Erforderlichenfalls können hierbei die gängigen Pumpen eingesetzt werden, wie beispielsweise Exzenterschnecken-, Drehkolben- oder Sinuspumpen.

Im Falle des Verfahrens mit Entspannungsbehälter wird die wässrige Polymerdispersion in Verfahrensschritt a) zwischen dem Entspannungsbehälter und dem Lagerbehälter mit einem oder mehreren Wärmetauschern gekühlt. Im Falle des Verfahrens ohne Entspannungsbehälter oder ohne Konfektionierbehälter wird die wässrige Polymerdispersion in Verfahrensschritt a) zwischen dem Polymerisationsreaktor und dem Lagerbehälter mit einem oder mehreren Wärmetauschern gekühlt. Geeignete Wärmetauscher sind beispielsweise Plattenwärmetauscher oder vorzugsweise Rohrbündelwärmetauscher oder in die Leitung eingebaute Kühlschlangen. Bei Einsatz von mehreren Wärmetauschern werden diese vorzugsweise hintereinandergeschaltet. Alternativ können auch ein oder mehrere Wärmetauscher über Bypässe an die Leitung angeschlossen sein, d.h. parallel geschaltet sein. Die Kühlung kann im Gleichstrom oder vorzugsweise im Gegenstrom erfolgen.

In Verfahrensschritt a) werden die wässrigen Polymerdispersionen auf eine Temperatur von ≤ 45 °C, vorzugsweise 15 °C bis 40 °C, noch mehr bevorzugt 25 °C bis 40 °C und besonders bevorzugt 30 °C bis 40 °C abgekühlt. Auf Grund des Abkühlens ist die Temperatur der Polymerdispersion unmittelbar nach Durchführung des Verfahrensschrittes a) niedriger als unmittelbar vor Durchführung des Verfahrensschrittes a). Im Zuge der Durchführung des Verfahrensschrittes a) wird die Polymerdispersion vorzugsweise um 1 °C bis 55 °C, besonders bevorzugt um 1 °C bis 45 °C, noch mehr bevorzugt um 5 °C bis 35 °C und am meisten bevorzugt um 5 °C bis 15 °C abgekühlt.

Zur Konfektionierung werden zwischen Wärmetauscher und Lagerbehälter ein oder mehrere Additive zudosiert. Vorzugsweise werden die Additive über eine oder mehrere Dosierpumpen, wie Kolbenmembranpumpen, in die Leitung zwischen Wärmetauscher und Vorratsbehälter zudosiert. Die Additive werden vorzugsweise in flüssiger Form zudosiert. Als Feststoff vorliegende Additive werden vorzugsweise in Lösung oder als wässrige Dispersion zudosiert. Die Additive können sich in Vorratsbehältern befinden, bevor sie zudosiert werden. Die Additive können dabei aus getrennten Vorratsbehältern jeweils über eine Dosierpumpe zudosiert werden. Es kann auch so vorgegangen werden, dass mehrere Additive als Gemisch aus einem Vorratsbehälter dosiert werden, oder bestimmte Additive einzeln dosiert werden und andere als Gemisch.

Zur Sicherstellung der Synchronität zwischen Dosiermenge der Additive und Durchflussmenge der Polymerdispersion, d.h. zur exakten Dosierung der Additive sind die Dosierpumpen vorzugsweise mit einer oder mehreren Regelvorrichtungen ausgestattet. Die Regelvorrichtungen umfassen beispielsweise einen oder vorzugsweise mehrere Durchflussmesser und eine Ratenregelungseinheit. Ein Durchflussmesser ist vorzugsweise zwischen dem Entspannungsbehälter und einem Wärmetauscher oder im Falle des Verfahrens ohne Entspannungsbehälter zwischen dem Polymerisationsreaktor und einem Wärmetauscher eingebaut. Ein Durchflussmesser ist vorzugsweise auch in die Leitung zwischen dem Wärmetauscher und dem Lagerbehälter verbaut. Die Durchflussmesser sind vorzugsweise mit einer Ratenregelungseinheit verknüpft, die wiederum die Pumpenleistung der Dosierpumpe des Additivs und/oder der Pumpe der Polymerdispersion steuert. Diese Maßnahmen tragen dazu bei, ein konstantes Mischungsverhältnis zwischen Polymerdispersion und Additiv sicherzustellen. In der Praxis hat es sich auch bewährt, einen ersten oder letzten Teil der aus dem Entspannungsbehälter oder dem Polymerisationsreaktor abgepumpten wässrigen Polymerdispersion nach Durchlaufen der Wärmetauscher und Passieren der Dosierpumpe(n) wieder in den Entspannungsbehälter oder im Falle des Verfahrens ohne Entspannungsbehälter in den Polymerisationsreaktor zurückzuführen und erneut abzupumpen. Damit können Inhomogenitäten in der Additivdosierung beim An- und Abfahren nivelliert werden.

In einer bevorzugten Ausführungsform ist die Leitung zum Lagerbehälter nach den Stellen, an denen ein oder mehrere Additive zudosiert werden, mit einer Mischeinheit ausgerüstet. Es kann nach jeder Stelle, an der zudosiert wird, oder vorzugsweise ausschließlich nach der letzten Stelle, an der zudosiert wird, eine Mischeinheit in die Leitung eingebaut sein. Die Mischeinheit unterstützt eine homogene und gleichmäßige Mischung der Additive und der wässrigen Polymerdispersion. Bevorzugt werden statische Mischeinheiten, beispielsweise ein Mischrohr mit eingebauten Prallplatten oder Umlenkblechen oder Statikmischer mit Füllkörpern.

Bevorzugt ist auch eine Ausführungsform, bei der die Mischeinheit mit einem Bypass umgangen werden kann. Diese Ausführungsform ist für den Fall von Nutzen, wenn an der der Mischeinheit vorausgehenden Dosiervorrichtung nicht zudosiert werden muss. Auf diese Weise können mit einer einzigen Anlage mit unterschiedlichen Additiven konfektionierte Polymerdispersionen hergestellt werden, ohne dass die Anlage zwischendurch gereinigt werden muss.

Mit dem erfindungsgemäßen Verfahren können den wässrigen Polymerdispersionen alle zur Konfektionierung gängigen Additive in den erforderlichen Mengen zudosiert werden. Beispiele hierfür sind Biozide, Konservierungsmittel, Entschäumer, Säuren oder Basen, oder Hydrophobierungsmittel.

Mit dem erfindungsgemäßen Verfahren kann wesentlich rascher abgekühlt werden als mit ausschließlicher Kühlung im Polymerisationsreaktor, Entspannungsbehälter oder Konfektionierbehälter. Die in herkömmlichen Verfahren eingesetzten Konfektionierbehälter haben im Allgemeinen zumindest das Volumen des Polymerisationsreaktors und sind mit Kühleinrichtungen, beispielsweise Doppelwand oder Wärmetauscher, ausgerüstet, um die Polymerdispersion auf die gewünschte Temperatur zu kühlen und anschließend mit dem Additiv zu versetzen. Durch die erfindungsgemäße Vorgehensweise erübrigt sich der Einsatz von Konfektionierbehältern und auch etwaige Haltezeiten der Dispersionen in Polymerisationsreaktoren oder Entspannungsbehältern vor Zugabe von empfindlichen Additiven können entfallen. In Konsequenz lässt sich damit die Dauer für einen Polymerisations- und Konfektionierzyklus um bis zu drei Stunden reduzieren. Das sind je nach Ansatzgröße eine Reduzierung der Zykluszeiten um 30 % bis 50 %, was enorme wirtschaftliche Vorteile mit sich bringt.

Das folgende Beispiel dient der detaillierten Erläuterung der Erfindung und ist in keiner Weise als Einschränkung zu verstehen.

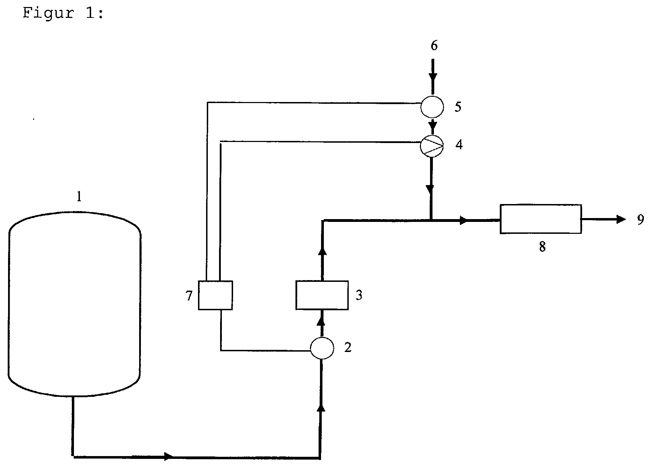

Aus dem Entspannungsbehälter (1) entsprechend Figur 1 wurde eine 65 °C warme wässrige Polyvinylalkohol-stabilisierte Dispersion eines Vinylacetat-Ethylen-Copolymers (Feststoffgehalt 60,1%) kontinuierlich entnommen und im Plattenwärmetauscher (3) auf 45 °C abgekühlt. Als Additiv wurde eine 1%ige wässrige Lösung eines Konservierungsmittels über die Leitung (6) zwischen dem Wärmeaustauscher (3) und dem statischen Mischer (8), d.h. vor dem Lagerbehälter (9) in den Strom der Polymerdispersion eingebracht. Die zugeführten Mengen an Polymerdispersion bzw. Konservierungsmittellösung wurden mittels der Durchflussmesser (2) und (5) gemessen und mittels der Ratenregelung (7) mit der Pumpe (4) so gesteuert, dass ein konstantes Mischverhältnis von Polymerdispersion zu Konservierungsmittellösung von 667 zu 1 erhalten wurde. Nach Passieren des statischen Mischers (8), in den Umlenkbleche eingebaut waren, war das Konservierungsmittel in der Polymerdispersion gleichmäßig mit einer Konzentration von 15 ppm verteilt. Die konfektionierte Polymerdispersion (9) wurde schließlich einem Lagerbehälter zugeführt.

Das erfindungsgemäße Verfahren ohne Entspannungsbehälter wurde analog ausgeführt wie das eben beschriebene Verfahren mit Entspannungsbehälter, wobei an Stelle des Entspannungsbehälters (1) der Polymerisationsreaktor (1) eingebaut war und an Stelle der Dispersion des Vinylacetat-Ethylen-Copolymers eine Dispersion eines Vinylacetat-Homopolymers eingesetzt wurde.

## Patentansprüche

1. Verfahren zur Konfektionierung wässriger Dispersionen von Polymeren auf Basis ethylenisch ungesättigter Monomere, indem ethylenisch ungesättigte Monomere mittels radikalisch initiierter Polymerisation in wässrigem Medium in einem Polymerisationsreaktor polymerisiert werden und die dabei gebildete wässrige Polymerdispersion in einen oder mehrere Entspannungsbehälter überführt wird und anschließend in einen oder mehrere lagerbehälter transferiert wird, **dadurch gekennzeichnet, dass**
die wässrige Polymerdispersion zwischen dem Entspannungsbehälter und dem Lagerbehälter
a) zuerst mit einem oder mehreren Wärmetauschern auf eine. Temperatur von ≤ 45 °C abgekühlt wird und
b) anschließend zwischen Wärmetauscher und Lagerbehälter ein oder mehrere Additiv(e) zudosiert werden.

2. Verfahren zur Konfektionierung wässriger Dispersionen von Polymeren auf Basis ethylenisch ungesättigter Monomere, indem ethylenisch ungesättigte Monomere mittels radikalisch initiierter Polymerisation in wässrigem Medium in einem Polymerisationsreaktor polymerisiert werden und die dabei gebildete wässrige Polymerdispersion vom Polymerisationsreaktor in einen oder mehrere Lagerbehälter transferiert wird, **dadurch gekennzeichnet, dass** die wässrige Polymerdispersion zwischen dem Polymerisationsreaktor und dem Lagerbehälter
a) zuerst mit einem oder mehreren Wärmetauschern auf eine Temperatur von ≤ 45 °C abgekühlt wird und
b) anschließend zwischen Wärmetauscher und Lagerbehälter ein oder mehrere Additiv(e) zudosiert werden,
wobei die wässrige Polymerdispersion vor Transferieren in einen Lagerbehälter in keinen Entspannungsbehälter und in keinen Konfektionierbehälter überführt wird.

3. Verfahren zur Konfektionierung wässriger Dispersionen von Polymeren nach Anspruch 1 oder 2, **dadurch gekennzeichnet, dass** ein oder mehrere ethylenisch ungesättigte Monomere ausgewählt werden aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide.

4. Verfahren zur Konfektionierung wässriger Dispersionen von Polymeren nach Anspruch 1 bis 3, **dadurch gekennzeichnet, dass** die wässrige Polymerdispersion in Verfahrensschritt a) auf eine Temperatur von 15 °C bis 40 °C abgekühlt wird.

5. Verfahren zur Konfektionierung wässriger Dispersionen von Polymeren nach Anspruch 1 bis 4, **dadurch gekennzeichnet, dass** die wässrige Polymerdispersion im Zuge der Durchführung des Verfahrensschrittes a) um 1 °C bis 55 °C abgekühlt wird.

6. Verfahren zur Konfektionierung wässriger Dispersionen von Polymeren nach Anspruch 1 bis 5, **dadurch gekennzeichnet, dass** bei Zugabe mehrerer Additive die Additive aus getrennten Vorratsbehältern jeweils über eine Dosierpumpe zudosiert werden, oder die Additive als Gemisch aus einem Vorratsbehälter dosiert werden, oder bestimmte Additive einzeln dosiert werden und andere als Gemisch dosiert werden.

7. Verfahren zur Konfektionierung wässriger Dispersionen von Polymeren nach Anspruch 6, **dadurch gekennzeichnet, dass** die Polymerdispersion in einer Leitung vom Wärmetauscher zum Lagerbehälter geführt wird, und die Leitung nach den Stellen, an denen ein oder mehrere Additive zudosiert werden, mit einer oder mehreren Mischeinheiten ausgerüstet ist.

8. Verfahren zur Konfektionierung wässriger Dispersionen von Polymeren nach Anspruch 7, **dadurch gekennzeichnet, dass** ein oder mehrere Mischeinheiten statische Mischeinheiten sind.

9. Verfahren zur Konfektionierung wässriger Dispersionen von Polymeren nach Anspruch 7 bis 8, **dadurch gekennzeichnet, dass** ein oder mehrere Mischeinheiten mit einem Bypass umgangen werden können.

10. Verfahren zur Konfektionierung wässriger Dispersionen von Polymeren nach Anspruch 1 bis 9, **dadurch gekennzeichnet, dass** ein oder mehrere Additive ausgewählt werden aus der Gruppe umfassend Biozide, Konservierungsmittel, Säuren oder Basen, Entschäumer und Hydrophobierungsmittel zudosiert werden.

## Claims

1. Method for finishing aqueous dispersions of polymers based on ethylenically unsaturated monomers, by polymerizing ethylenically unsaturated monomers by means of radically initialized polymerization in an aqueous medium in a polymerization reactor, and transferring the resultant aqueous polymer dispersion into one or more letdown vessels and subsequently into one or more storage vessels, **characterized in that** the aqueous polymer dispersion between the letdown vessel and the storage vessel
a) is first cooled using one or more heat exchangers to a temperature of ≤ 45°C, and
b) subsequently one or more additives are metered in between heat exchanger and storage vessel.

2. Method for finishing aqueous dispersions of polymers based on ethylenically unsaturated monomers, by polymerizing ethylenically unsaturated monomers by means of radically initialized polymerization in an aqueous medium in a polymerization reactor, and transferring the resultant aqueous polymer dispersion from the polymerization reactor into one or more storage vessels, **characterized in that** the aqueous polymer dispersion between the polymerization reactor and the storage vessel
a) is first cooled using one or more heat exchangers to a temperature of ≤ 45°C, and
b) subsequently one or more additives are metered in between heat exchanger and storage vessel, the aqueous polymer dispersion not being transferred into any letdown vessel or into any finishing vessel before it is transferred into a storage vessel,

3. Method for finishing aqueous dispersions of polymers according to Claim 1 or 2, **characterized in that** one or more ethylenically unsaturated monomers are selected from the group encompassing vinyl esters of carboxylic acids having 1 to 15 C atoms, methacrylic esters or acrylic esters of carboxylic acids with unbranched or branched alcohols having 1 to 15 C atoms, olefins, dienes, vinylaromatics, and vinyl halides.

4. Method for finishing aqueous dispersions of polymers according to Claim 1 to 3, **characterized in that** the aqueous polymer dispersion is cooled in method step a) to a temperature of 15°C to 40°C.

5. Method for finishing aqueous dispersions of polymers according to Claim 1 to 4, **characterized in that** the aqueous polymer dispersion, as part of the implementation of method step a), is cooled by 1°C to 55°C.

6. Method for finishing aqueous dispersions of polymers according to Claim 1 to 5, **characterized in that** on addition of two or more additives, the additives are each metered in from separate reservoir vessels via a metering pump, or the additives are metered as a mixture from a reservoir vessel, or certain additives are metered individually and others are metered as a mixture.

7. Method for finishing aqueous dispersions of polymers according to Claim 6,
**characterized in that** the polymer dispersion is passed in a line from the heat exchanger to the storage vessel, and the line, downstream of the locations at which one or more additives are metered in, is equipped with one or more mixing units.

8. Method for finishing aqueous dispersions of polymers according to Claim 7, **characterized in that** one or more mixing units are static mixing units.

9. Method for finishing aqueous dispersions of polymers according to Claim 7 to 8, **characterized in that** one or more mixing units may be circumvented with a bypass.

10. Method for finishing aqueous dispersions of polymers according to Claim 1 to 9, **characterized in that** one or more additives selected from the group encompassing biocides, preservatives, acids or bases, defoamers, and hydrophobizing agents are metered in.

## Revendications

1. Procédé de préparation de dispersions aqueuses de polymères à base de monomères éthyléniquement insaturés, selon lequel des monomères éthyléniquement insaturés sont polymérisés par polymérisation initiée radicalairement dans un milieu aqueux dans un réacteur de polymérisation et la dispersion aqueuse de polymères formée est transférée dans un ou plusieurs contenants de détente, puis transférée dans un ou plusieurs contenants de stockage, **caractérisé en ce que**
entre le contenant de détente et le contenant de stockage, la dispersion aqueuse de polymères
a) est tout d'abord refroidie avec un ou plusieurs échangeurs de chaleur à une température ≤ 45 °C, puis
b) un ou plusieurs additifs sont ajoutés entre l'échangeur de chaleur et le contenant de stockage.

2. Procédé de préparation de dispersions aqueuses de polymères à base de monomères éthyléniquement insaturés, selon lequel des monomères éthyléniquement insaturés sont polymérisés par polymérisation initiée radicalairement dans un milieu aqueux dans un réacteur de polymérisation et la dispersion aqueuse de polymères formée est transférée depuis le réacteur de polymérisation dans un ou plusieurs contenants de stockage, **caractérisé en ce que**
entre le réacteur de polymérisation et le contenant de stockage, la dispersion aqueuse de polymères
a) est tout d'abord refroidie avec un ou plusieurs échangeurs de chaleur à une température ≤ 45 °C, puis
b) un ou plusieurs additifs sont ajoutés entre l'échangeur de chaleur et le contenant de stockage,
la dispersion aqueuse de polymères n'étant pas transférée dans un contenant de détente ou dans un contenant de préparation avant le transfert dans un contenant de stockage.

3. Procédé de préparation de dispersions aqueuses de polymères selon la revendication 1 ou 2, **caractérisé en ce qu'**un ou plusieurs monomères éthyléniquement insaturés sont choisis dans le groupe comprenant les esters vinyliques d'acides carboxyliques de 1 à 15 atomes C, les esters de l'acide méthacrylique ou les esters de l'acide acrylique d'acides carboxyliques avec des alcools non ramifiés ou ramifiés de 1 à 15 atomes C, les oléfines, les diènes, les composés aromatiques de vinyle et les halogénures de vinyle.

4. Procédé de préparation de dispersions aqueuses de polymères selon les revendications 1 à 3, **caractérisé en ce que** la dispersion aqueuse de polymères est refroidie à une température de 15 °C à 40 °C à l'étape de procédé a).

5. Procédé de préparation de dispersions aqueuses de polymères selon les revendications 1 à 4, **caractérisé en ce que** la dispersion aqueuse de polymères est refroidie de 1 °C à 55 °C au cours de la réalisation de l'étape de procédé a).

6. Procédé de préparation de dispersions aqueuses de polymères selon les revendications 1 à 5, **caractérisé en ce que**, lors de l'ajout de plusieurs additifs, les additifs sont ajoutés à partir de contenants de stockage séparés, à chaque fois par une pompe de dosage, ou les additifs sont ajoutés sous la forme d'un mélange à partir d'un contenant de stockage, ou certains additifs sont ajoutés individuellement et d'autres sont ajoutés sous la forme d'un mélange.

7. Procédé de préparation de dispersions aqueuses de polymères selon la revendication 6, **caractérisé en ce que** la dispersion de polymères est transférée dans une conduite de l'échangeur de chaleur vers le contenant de stockage, et la conduite est équipée d'une ou de plusieurs unités de mélange après les emplacements auxquels un ou plusieurs additifs sont ajoutés.

8. Procédé de préparation de dispersions aqueuses de polymères selon la revendication 7, **caractérisé en ce qu'**une ou plusieurs unités de mélange sont des unités de mélange statiques.

9. Procédé de préparation de dispersions aqueuses de polymères selon les revendications 7 à 8, **caractérisé en ce qu'**une ou plusieurs unités de mélange peuvent être contournées par une dérivation.

10. Procédé de préparation de dispersions aqueuses de polymères selon les revendications 1 à 9, **caractérisé en ce qu'**un ou plusieurs additifs choisis dans le groupe comprenant les biocides, les conservateurs, les acides ou les bases, les agents antimousse et les agents hydrophobes sont ajoutés.
